# EUROPEAN PATENT SPECIFICATION

(11) **EP 3 387 454 B1**
(45) Date of publication and mention of the grant of the patent: **30.12.2020**
(21) Application number: 16873566.0
(22) Date of filing: 17.11.2016
(51) Int. Cl.: H01F 27/06, H01F 27/42, G05F 1/12, H02J 3/18

(54) **POWER TRANSMISSION TOWER MOUNTED SERIES INJECTION TRANSFORMER**
AN EINEM HOCHSPANNUNGSMAST MONTIERTER REIHENEINSPEISUNGSTRANSFORMATOR
TRANSFORMATEUR À INJECTION EN SÉRIE MONTÉ SUR UN PYLÔNE ÉLECTRIQUE

(30) Priority: 10.12.2015 US 201562265626 P; 18.05.2016 US 201615157726
(43) Date of publication of application: 17.10.2018
(73) Proprietor: Smart Wires Inc., Union City, CA 94587 (US)
(72) Inventor: CARROW, Joe, Union City, CA 94587 (US); FARAHANI, Ali, Union City, CA 94587 (US); INAM, Haroon, Union City, CA 94587 (US); MUNGUIA, David, Union City, CA 94587 (US); IYER, Amrit, Union City, CA 94587 (US); DAS, Debrup, Union City, CA 94587 (US); KELLEY, Arthur, Union City, CA 94587 (US)
(74) Representative: Gallego Jiménez, José Fernando
(86) International application number: PCT/US2016/062620
(87) International publication number: WO 2017/099967

(56) References cited:
- JP-A- 2012 060 711
- US-A- 4 286 207
- US-A- 4 323 722
- US-A- 6 144 191
- US-A1- 2005 052 801
- US-A1- 2008 061 632
- US-A1- 2008 278 976
- US-A1- 2010 026 275
- US-A1- 2014 111 297
- US-A1- 2014 327 305
- US-A1- 2015 226 772
- US-B1- 6 841 976

## Description

The present invention relates to an apparatus for use in a high voltage power distribution system

One of the requirements of improving the efficiency of the power grid is the removal of transmission bottlenecks related to active power flow control. The need is to control where and how the real power flow is achieved on the grid. Congested networks limit the system reliability and increase the cost of power delivery across the power grid. To improve the power flow through-put of the grid, it is necessary to be able to adjust the power flowing along any of the wires. Unbalanced lines produce uncontrolled loop currents, overloading the lines with increased losses. Active power flow control provides the best solution for this problem by altering the line impedances and changing the angle of the voltage on the respective line, thereby controlling power flow. Active power flow control using impedance injection (both capacitive and inductive) with centralized control at network level has been proposed in the past but the complexity and cost of such systems have prevented implementation. Most of the grid control capabilities by injecting impedance are still ground based, installed at substations with switch-able inductive and capacitive loads that have the associated requirement for high-voltage insulation and high-current switching capabilities. Being at the substations, they are able to use cooling methods that include oil cooling etc. with less weight limitations and less limitations of the profile of the units used. There is consensus that future power grids will need to be smart and aware, fault tolerant and self-healing, dynamically and statically controllable, and asset and energy efficient. It has also been understood that distributed active impedance injection units that are intelligent and self aware will be able provide the needed distributed control of the line impedance if such can be effectively implemented with high reliability. Such a system implementation can provide the solution to this dilemma and improve the system power grid efficiency substantially.

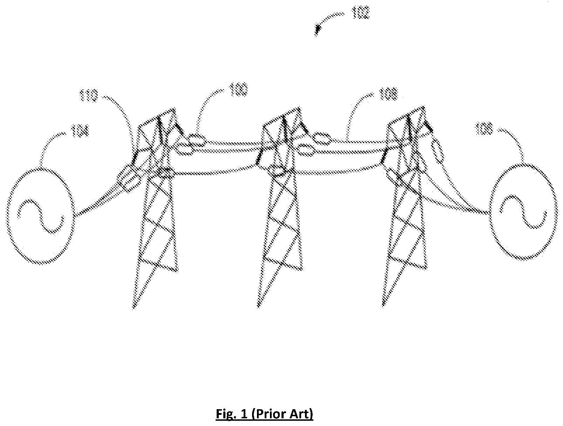

At present there are few solutions for distributed control of the power grid, which have been proven effective and reliable. One such system is the Power Line Guardian™ commercial product from the assignee of the current application. Fig. 1 shows the block schematic 102 of the current static distributed control capability. These static distributed control modules 110 and 100 are directly attached to high-voltage-transmission line segments 108 to provide distributed control of the transmitted power from the generator 104 to the distribution stations 106. These solutions provide a limited amount of control success by adding inductive load to the lines by switching the inductance load in and out of circuit, and are described in patents #7,105,952 and #7,835,128 currently licensed to the assignee of the current application. PCT Publication No. WO2014/099876, owned by the assignee of the current application, discusses the physical installation on the power line.

The distributed module 100 is a distributed series reactor (DSR) that impresses a static inductive load using a transformer with a single turn primary winding (the HV-line section) with a single multi-turn secondary winding by having a pre-defined inductance switched on and off to impress the inductance on the HV-transmission line. The DSR 100 allows a passive, switch-able distributed inductance to be gradually inserted into a conductor 108, thus effectively increasing the line impedance and causing current to direct into other lines that have additional capacity. A distributed series impedance device such as the DSR 100 is clamped around the conductor 108 using a single turn transformer (STT).

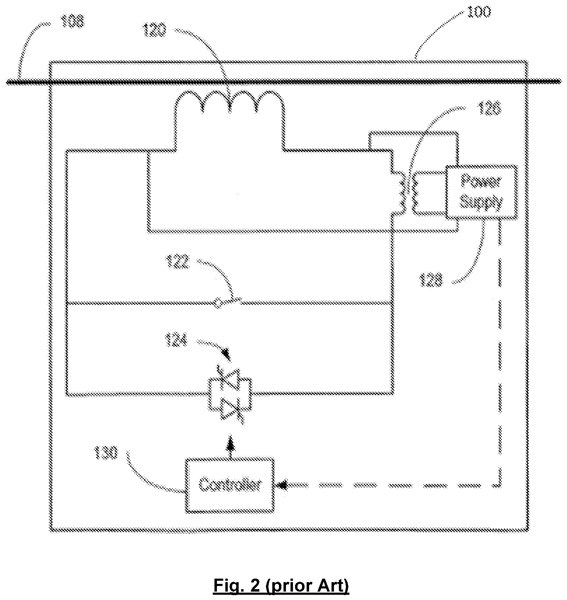

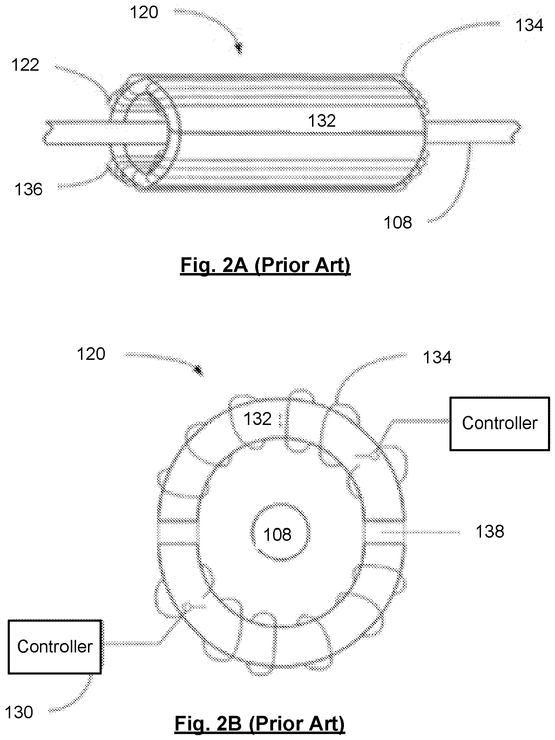

Figs. 2 and 2A and 2B show examples of a passive impedance injection module DSR 100. The HV transmission line 108 is incorporated into the module as the primary winding by adding two split-core sections 132 that are assembled around the HV transmission line 108. The core sections 132 are attached to the HV transmission line 108 with an air gap 138 separating the sections after assembly. The air gap 138 is used to set a maximum value of fixed inductive impedance that is to be injected on the HV line via the primary winding. Secondary winding 134 and 136 encircles the two split-core sections 132 and enabled the bypass switch 122 to short out the secondary winding and prevent injection of inductive impedance on to the a HV transmission line 108 and also provide protection to the secondary circuits when power surges occur on the HV transmission line. The split core sections 132 and the windings 134 and 136 comprise the single-turn transformer (STT) 120. A power supply module 128 derives power from the secondary windings 134&136 of the STT 120 via a series connected transformer 126. The power supply 128 provides power to a controller 130. The controller 130 monitors the line current via the secondary current of the STT 120, and turns the bypass switch 122 off when the line current reaches and exceeds a predetermined level. With the contact switch 122 open, a thyristor 124 may be used to control the injected inductive impedance to a value up to the maximum set by the air gap 138 of DSR 100.

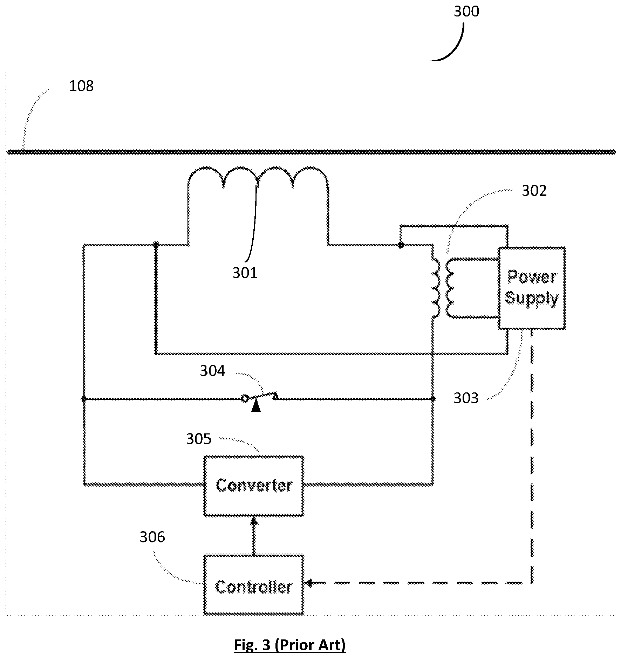

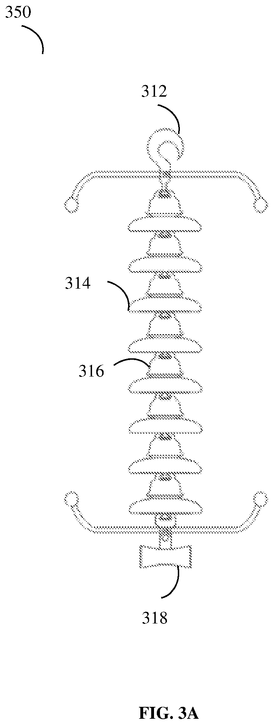

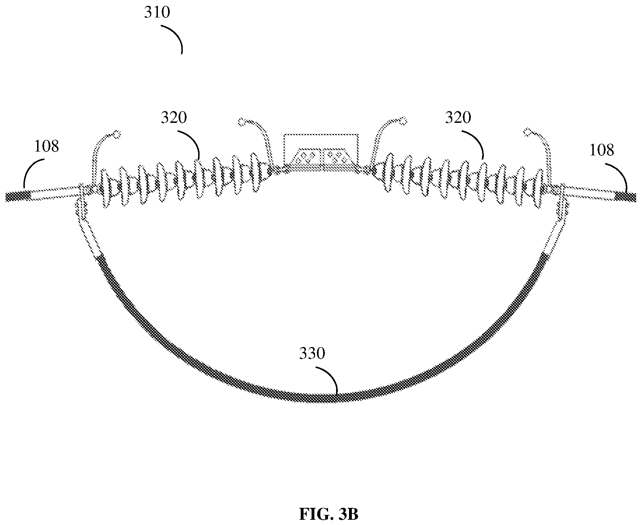

Distributed active impedance injection modules on high voltage transmission lines have been proposed in the past. US patent 7,105,952 of Divan et al. licensed to the applicant entity is an example of such. Fig. 3 shows an exemplary schematic of an active distributed impedance injection module 300. These modules 300 are expected to be installed in the same location on the HV power line as the passive impedance injection modules (or "DSR" 100) shown Fig. 1. The active impedance injection module 300 does not perform the same functions. In fact the active impedance injection module 300 does not have a gapped core 132 of Fig. 2B that provides the fixed inductive impedance. Instead the inductive or capacitive impedance is generated using the converter 305 based on the sensed HV transmission line 108 current. Sampling the secondary current by the series-connected secondary transformer 302 does the sensing of the magnitude of the line current. The sensing and power supply block 303 connected to the secondary transformer 302 extracts the HV transmission line current information and feeds the controller 306. The controller based on the received input provides the necessary commands to the converter 305 to generate the required inductive or capacitive impedance to adjust the line impedance. The value of the impedance in this case is not fixed but varies according to the status of the measured current on the HV transmission line. Hence the system using spatially distributed active impedance injection modules 300 provides for a much smoother and efficient method for balancing the grid.

In practice the active impedance injection modules 300s have not been practical due to reasons of cost and reliability. In order to inject the needed impedances on to the HV transmission line for providing reasonable line balancing there is a need to generate a significant amount of power in the converter circuits. This has required the active impedance injection modules 300 to use specialized devices with adequate voltages and currents ratings.

The failure of a module in a spatially distributed inductive impedance injection line balancing system using DSR 100 modules inserts a fixed inductive impedance set by the "air gap" 138 or substantially zero impedance on to the line. Failure of a few modules out of a large number distributed over the HV transmission line does not mandate the immediate shutdown of the line. The repairs or replacement of the failed modules can be undertaken at a time when the line can be brought down with minimum impact on the power flow on the grid. For utilities to implement distributed active line balancing, the individual modules must be extremely reliable. They also have to be cost effective to be accepted by the Utilities.

Power transmission line balancing circuits have been limited to the use of delayed-acting heavy-duty fully-insulated oil-cooled inductive and capacitive impedance injectors or phase-shifting transformers prone to single-point failures, located at substations where repairs of these failed units can be handled with out major impact on power transfer over the grid.

A STT clamped to the HV-transmission line has limited influence on the power flow. A multi-turn transformer (MTT) would have many times the influence of the STT but requires cutting the HV-transmission line to install. The HV-transmission line typically hangs from a suspension tower which applies a vertical force to support the weight of the HV-transmission line. The HV-transmission line has significant horizontal tension and a break in the HV-transmission line can exert sufficient force to cause the suspension towers to topple over. Installing, maintaining and replacing a MTT that connects to the two ends of a cut in the HV-transmission line would be difficult, expensive and potentially dangerous. A STT clamped to the HV-transmission line has a weight limitation that inhibits its influence. The influence of a transformer depends on the weight of the transformer. The clamped STT must be light enough to avoid adding excessive tension to HV-transmission line and needs to be stable in extreme weather conditions such as high winds.

The HV-power grids would benefit significantly if the distributed series reactors could exert greater influence by, for example, using transformers with more weight.

US 2008/0061632 A1 discloses a switching apparatus for a power line segment having a length of several tens of kilometer and consisting of a plurality (in particular four) parallel conductors. The switching apparatus comprises a number of vacuum interrupters each coupled between an end of one of the parallel conductors and a common node for short-circuiting the ends of the conductors together. Further, the document discloses a back-to-back switching module coupled between two adjacent segments of a power line and comprising two switching apparatus connected in series, each switching apparatus being coupled to the ends of the parallel conductors of a respective segment of the two adjacent segments. In its figures, the document shows a perspective view of a pylon onto which the back-to-back switching module is coupled in series between two overvoltage protection circuits which in turn are coupled to four associated jumper conductors each coupled to an end of a conductor of the power line segments. The ends of the conductors of the power line segments are connected to horizontal strain insulators mounted to the pylon. Each back-to-back switching module is mounted to the pylon by two insulators.

It is an object of the invention to provide an active impedance injection module that supports a higher voltage-injection capability and has the advantages of distributed injection modules.

This object is achieved by an apparatus for use in a high voltage power distribution system as claimed in claim 1.

The apparatus according to the invention comprises an active impedance injection module having a voltage converter and a series injection transformer having a multi-turn primary winding, the voltage converter generating voltages at the appropriate phase angle to be impressed on a secondary winding of the series injection transformer to inject an inductive or capacitive load on the transmission line. The use of a multi-turn primary winding supports a higher voltage-injection capability but results in a much heavier module than a transformer device clamped to the high-voltage transmission line, i.e. having a single turn primary winding. The active impedance injection module is suspended from a tower of the high voltage power distribution system by a suspension insulator supporting the weight of the active impedance injection module. The ends of first and second high voltage line segments of the high voltage transmission line are connected to the tower through first and second strain insulators, respectively. A first end of each of a first jumper and a second jumper are connected to a respective one of the ends of the first and second high voltage line segments. The second end of each of the first and second jumpers are each connected to a respective end of the primary winding so that the multi-turn primary winding is connected in series to the high voltage transmission line.

The drawings are made to point out and distinguish the invention from the prior art. The objects, features and advantages of the invention are detailed in the description taken together with the drawings.
Fig. 1 is a block diagram of a grid section showing distributed static control modules attached directly to the HV-transmission-lines (Prior Art).
Fig. 2 is an exemplary block diagram of an inductive impedance injection module using a single turn transformer for distributed inductive impedance injection on a HV-transmission-line (Prior art).
Figs. 2A and 2B are exemplary schematics of the single turn transformer used in the passive impedance injection module of Fig. 2 (Prior Art).
Fig. 3 is an exemplary block diagram 300 of an active impedance injection module, licensed to the current entity, using a single turn transformer for distributed active impedance injection on to a HV transmission line (Prior Art).
Fig. 3A shows a typical suspension insulator (Prior Art).
Fig. 3B shows a typical strain insulator (Prior Art).
Fig. 4 is a block diagram 400 of an embodiment of the disclosed active impedance injection module using multi-turn primary windings for distributed active impedance injection on a HV transmission line.
Fig. 4A is an exemplary schematic of a multi-turn primary transformer.
Fig. 4B shows an exemplary cross section of the multi-turn transformer of Fig. 4A.
Fig. 4C is a diagram showing the TMIT connected to a tension-bearing tower according to an embodiment of the present invention.
Fig. 5 is a diagram showing the TMIT connections.

The power transmission tower mounted series injection transformer/module (TMIT) injects impedance and/or voltage on a transmission tower power line to control and regulate power flow. In contrast to the prior solution of clamping the injection transformer to the HV transmission line, the TMIT is supported from a tension bearing tower using vertical and horizontal insulators. The TMIT can be much heavier than a transformer device clamped to the high-voltage (HV) transmission line; for example 1000 lb (450 kg) instead of 200 lb (90 kg). A heavier transformer generally supports a higher voltage-injection capability as well as a higher current capability. The TMIT is normally connected in series with the tension-bearing tower's jumper allowing it to use a multi-turn transformer. The TMIT has much greater influence on the HV-transmission line; for example it may inject 100 to 400 volts compared to 10 volts for the prior art solution. By operating at the line voltage potential, the TMIT does not require the large bushings and oil drums used by sub-station injection transformers.

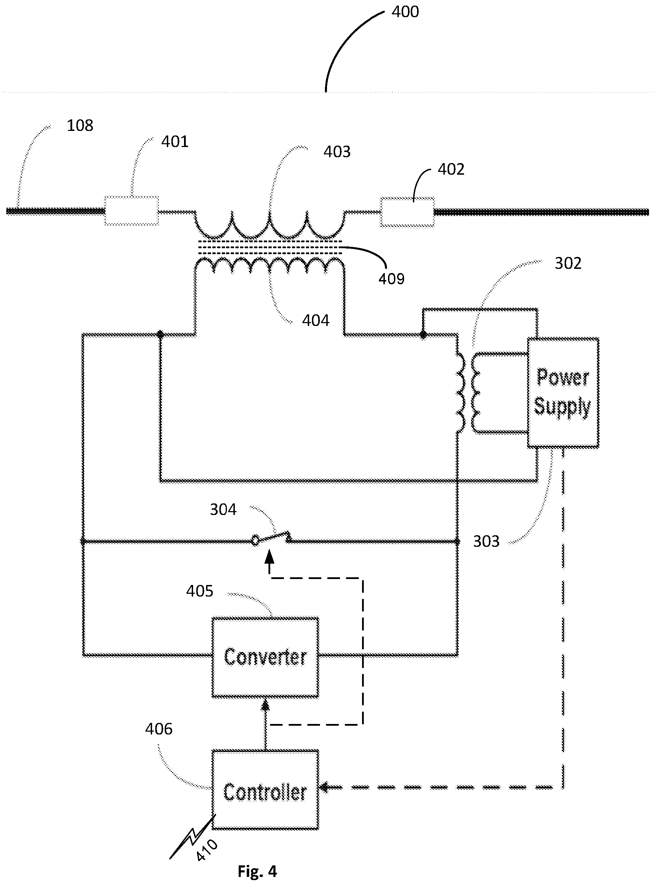

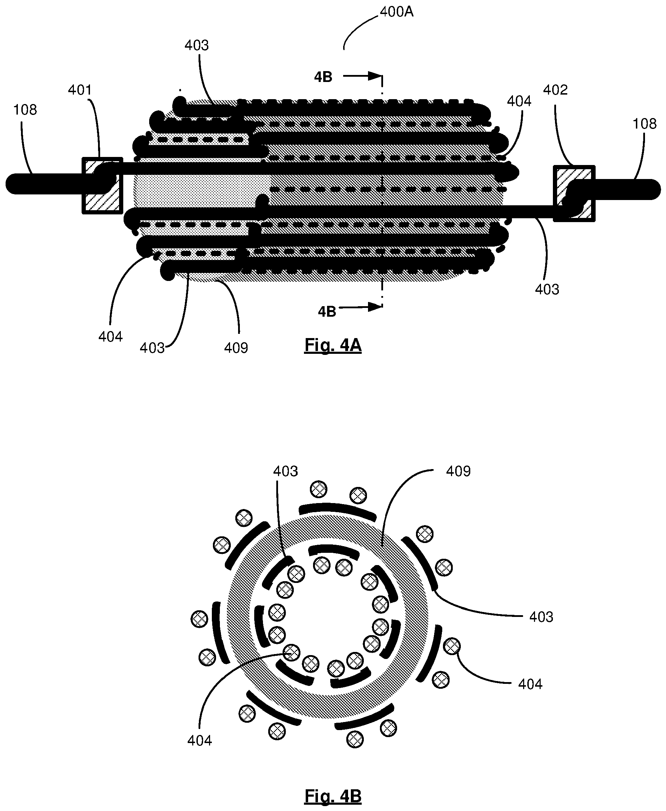

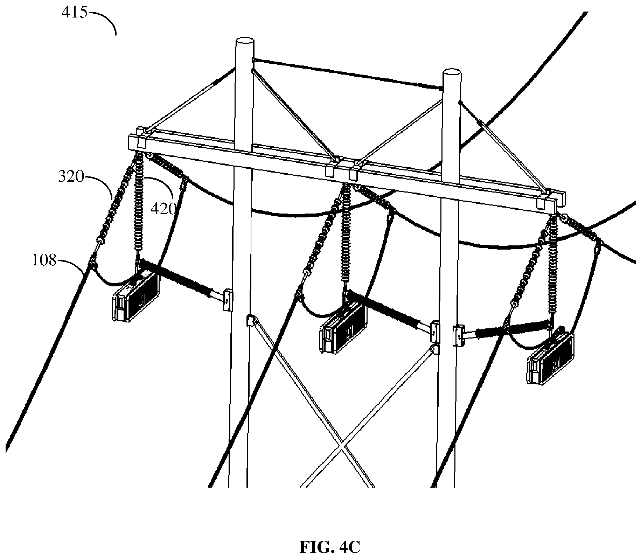

The current invention addresses the advantages and features of the distributed injection transformers/modules with enhanced support to allow use of larger and heavier distributed injection transformers/modules for the associated enhanced injection capabilities, thereby enhancing the total injection capability and/or reducing the total number of distributed injection transformers/modules needed. Fig. 4 illustrates a module, wherein the voltage converter or simply converter may be of any appropriate design, as such devices of various designs are well known in the art. Typically such devices are configured to inject an inductive load onto the high voltage transmission line, and may also have the capability of injecting a capacitive load on the transmission line for power factor control, and may further be capable of controlling harmonic content in the high voltage transmission line. Such devices are also known by other names, such as by way of example, inverters or converters/inverters. An exemplary device of this general type is the combination of the inverter 71 and energy storage 74 of U.S. Patent No. 7,105,952, though many other examples of such devices are well known. These devices typically act as active impedances to controllably impose the desired impedance onto the high voltage transmission line. Also preferably the controller used in the preferred embodiments includes a transceiver for receiving control signals and reporting on high voltage transmission line conditions, etc.

HV-transmission lines for high voltage power distribution systems are most commonly suspended from a type of tower called a suspension tower. The suspension tower supports the weight of the HV-transmission line using a suspension insulator. Fig. 3A shows a typical suspension insulator 350. The suspension insulator 350 hangs from a tower with connector 312 and the line conductor 108 is suspended from connector 318. The suspension insulator 350 typically consists of a series of ceramic disc insulators 314 and rubber grommets 316.

When a suspension insulator is used to sustain extraordinary tensile conductor loads it is referred to as a strain insulator. When there is a dead end or there is a sharp corner in transmission line, the line has to sustain a great tensile load of conductor or strain. A strain insulator must have considerable mechanical strength as well as the necessary electrical insulating properties.

A dead-end tower (also known as an anchor tower or anchor pylon) is a fully self-supporting structure used in construction of overhead transmission lines. A dead-end tower uses horizontal strain insulators where the conductors mechanically terminate. Dead-end towers may be used at a substation as a transition to a "slack span" entering the equipment, when the circuit changes to a buried cable, when a transmission line changes direction by more than a few degrees, or just once in a while to limit the extent of a catastrophic collapse. Since dead-end towers require more material and are heavier and costlier than suspension towers, it is uneconomic to build a line with only self-supporting structures.

Dead-end towers are used at regular intervals in a long transmission line to limit the cascading tower failures that might occur after a conductor failure. An in-line dead-end tower will have two sets of strain insulators supporting the lines in either direction, with the lines connected by a jumper between the two segments. Dead-end towers can resist unbalanced forces due to line weight and tension, contrasted with suspension towers which mostly just support the conductor weight and have relatively low capacity for unbalanced load. A dead-end construction tower is another example of a tension-bearing tower that uses strain insulators and a jumper.

Fig. 3B is a diagram 310 showing typical strain insulators 320. Each strain insulator 320 supports the mechanical weight and horizontal tension of a HV-transmission line 108. The jumper 330 electrically connects the HV-transmissions lines 108 coming from adjacent towers or sub-stations. Unlike the HV-transmission line 108, the jumper 330 has negligible tension.

Fig. 4 is a block diagram 400 of an implementation of the active impedance injection module (injection module) of the current invention. The injection module 400 comprises a multi-turn transformer 400A (see Fig. 4A) that has its primary winding 403 connected directly to the transmission line 108 of a high voltage power distribution system by breaking the line and attaching the two ends of the primary winding 403, and splicing into the line segment as shown in Fig. 4A at 401 and 402. The primary winding 403 is in series with the HV transmission line 108 and carries the total current carried by the transmission line 108. In order to reduce losses due to skin effect in the conductors and thereby reduce the heating of the conductors used in the primary winding, 403 of the multi-turn transformer 400A, ribbon conductor or a braided ribbon conductor may be used, instead of the standard conductor, for the primary winding 403, as shown in the exemplary cross section Fig. 4B of the multi-turn transformer, 400A. The ribbon/ braided ribbon conductor when used, also helps to reduce the overall weight of the conductor used and hence reduce the weight of the whole injection module 400. A non-gapped transformer core 409, of high permittivity material, is used to allow the maximum coupling possible between the primary winding 403 and the secondary winding 404 of the multi-turn transformer 400A. In this instance it is essential to have the splicing system design to be made robust to withstand the stresses that the splicing system will be subject to in the event of a utility-level fault current, to minimize the chance that splicing unit 401 and 402 failure will take down the line 108. The secondary winding 404 of the transformer couples to the primary winding 403 and is floating with respect to the primary winding. A virtual ground at the potential of the HV transmission line 108 is established by connecting one side of the secondary winding of the multi-turn transformer to the HV transmission line that enables the injection module 400 itself to be floating at high voltage of the HV transmission line 108 during operation.

A second low voltage transformer 302 in the secondary circuit is connected to a power supply 303 within the injector module 400 that generates the necessary power required for the low voltage electronics comprising the sensing, communication and control circuitry, all of which are lumped in the block diagram of the module as controller 406, the voltage converter 405 and the secondary winding shorting switch 304. The switch is activated to prevent damage to the circuits connected across the secondary winding 404 during occurrence of high transients on the HV-transmission-line due to line short circuit or lightning strikes. The controller 406 has sensor circuitry for monitoring the status of the line and to trigger the protection circuits 304, and communication capability 410 for inter link communication and for accepting external configuration and control commands, which are used to provide additional instructions to the converter 406. The voltage converter 405 is an active voltage converter that, based on input from the controller 406, generates the necessary leading or lagging voltages of sufficient magnitude, to be impressed on the secondary winding 404 of the power line transformer of the distributed active impedance injection module 400, to be coupled to the HV-transmission-line 108 through the series connected multi-turn primary winding 403 of the transformer. This injected voltage at the appropriate phase angle is able to provide the necessary impedance input capability for balancing the power transfer over the grid in a distributed fashion. The multi-turn primary 403 of the disclosed transformer 400A coupled to the HV-transmission line 108 is hence the main enabler for implementing the active distributed control of the power transfer and balancing of the grid.

The current application addresses the advantages and features of the use of multi-turn primary windings 403 of a distributed active impedance injection module (injector module) 400 attached to the HV-transmission-line 108. By using a multi-turn primary winding 403 the multi-turn transformer 400A is able to impress a higher voltage on the power HV transmission line while the connected circuits of the secondary winding 404 (converter 405, controller 406 and protection switch 304) of the transformer 400A are able to operate at lower voltage ranges, that are typical of power electronic components commercially available. This enables cost-effective manufacture of the module using standard components and devices while providing the needed high reliability to the modules and high reliability to the grid system. The use of this type of injection module 400 allows fast response to changes in loading of the HV transmission lines at or close to the point of change for dynamic control and balancing of the transmission lines. By providing the capability for injection of sufficiently large inductive and capacitive loads in line segments using reliable distributed injector modules 400, the over all system stability is also improved. The injector module 400 of the current invention is not confined to substations, as in the past, but is enabled to provide power flow control capability within existing utility right-of-way corridors in a distributed fashion. The use of multi-turn primary winding 403 also allow the typical use of non-gapped core for the transformer improving the weight and power transfer coupling of the device to the HV-transmission-line 108.

It should be understood that all the associated circuits of the module are enclosed in a housing, which is suspended insulated from ground at the HV transmission line voltage. Due to weight considerations these modules are suspended from the towers or provide additional support for their safe attachment.

Fig. 4A is an exemplary diagram showing a multi-turn transformer 400A that has its primary winding 403 connected directly to the transmission line 108 for high voltage power distribution systems by breaking the line and attaching the two ends of the primary winding 403, by splicing into the line segment as shown at 401 and 402. Fig. 4B shows an exemplary cross section of the multi-turn transformer of Fig. 4A. The primary winding 403 is in series with the HV transmission line, 108 and carries the total current carried by the transmission line, 108. A non-gapped transformer core 409, of high permittivity material, is used to allow the maximum coupling possible between the primary winding 403 and the secondary winding 404 of the multi-turn transformer 400A. The secondary winding 404 of the transformer couples to the primary winding 403 and is floating with respect to the primary winding.

Fig. 4C is a diagram 415 according to an embodiment of the present invention showing the TMIT 450 physically connected by suspension insulator 420 and horizontal post insulator 430. The TMIT 450 includes one or more active impedance injection modules 400. The suspension insulator 420 supports the full TMIT's 450 weight. The horizontal post insulator 430 stabilizes the position of the TMIT 450 and prevents or limits high wind movement. The TMIT 450 is electrically connected in series to the jumper 330 which is electrically connected to the HV-transmission line 108. The strain insulators 320 support the full weight and tension of the HV-transmission line 108.

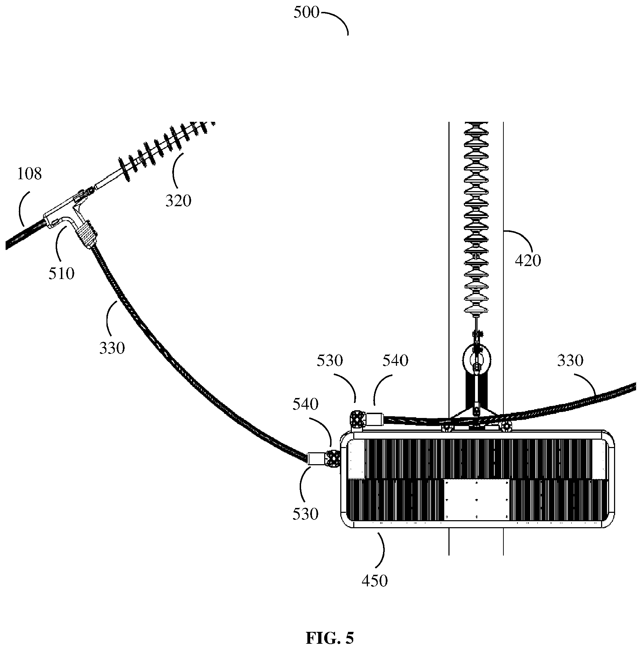

Fig. 5 is a diagram 500 according to an embodiment of the present invention showing the TMIT 450 connections. A commodity off-the-shelf conductor strain clamp 510 physically connects the HV-transmission line 108, the strain insulator 320 and the jumper 330. The commodity off-the-shelf conductor strain clamp 510 electrically connects the HV-transmission line 108 to the jumper 330. The jumper 330 terminates at a commodity off-the-shelf jumper terminal 530 and electrically connects to the TMIT 450 with a bolted primary connection 540. The suspension insulator 420 supports the TMIT's 450 weight.

One end of the TMIT is called the local ground. The local ground is at the line potential, at high-voltage, typically 200-300KV. After the TMIT does its work there may be 100 volts difference. The TMIT needs 1/8" of plastic to insulate wires experiencing the 100V potential difference.

If there is a long sequence of suspension towers without any tension-bearing towers, the TMIT is installed on a suspension tower converted to a tension-bearing tower. To convert the suspension tower to a tension-bearing tower, strain insulators are attached to the tower, the horizontal strain in the HV-transmission line is temporarily supported, the HV-transmission line is cut and the ends are connected to the strain insulators. The horizontal strain in the HV-transmission line is typically supported by clamping together segments either side of the cut.

## Claims

1. An apparatus, for use in a high voltage power distribution system, said apparatus comprising:
a high voltage transmission line (108); an active impedance injection module (400; 450) having a voltage converter (405) and a series injection transformer (400A), said series injection transformer having a multi-turn primary winding (403) having first and second ends, the voltage converter (405) generating voltages at the appropriate phase angle to be impressed on a secondary winding (404) of the series injection transformer (400A) to inject an inductive or capacitive load on the transmission line (108);
a tower; the active impedance injection module (400; 450) being suspended from the tower by a suspension insulator (420) supporting the weight of the active impedance injection module (400; 450);
an end (401, 402) of first and second high voltage line segments of the high voltage transmission line (108) being connected to the tower through first and second strain insulators (320), respectively; and
first and second jumpers (330), a first end of each of the first and second jumpers (330) being connected to a respective one of the ends of the first and second high voltage line segments (108);
the second end of each of the first and second jumpers (330) each being connected to a respective end of the primary winding so that the multi-turn primary winding (403) is connected in series to the high voltage transmission line (108).

2. The apparatus of claim 1 wherein the tower is a dead-end tower.

3. The apparatus of claim 1 or 2 further comprising a horizontal post insulator (430) coupled between the tower and the active impedance injection module (400; 450) and stabilizing the position of the active impedance injection module (400; 450) to prevent or limit high wind movement of the active impedance injection module (400; 450).

4. The apparatus of claim 1 wherein the active impedance injection module (400; 450) operates at a potential of the high voltage line segments (108).

5. The apparatus of claim 1 wherein the series injection transformer (400A) has a non-gapped transformer core (409) of high permittivity material.

6. The apparatus of claim 1 wherein the active impedance injection module (400; 450) comprises a series injection transformer (400A) within a housing.

## Patentansprüche

1. Vorrichtung zur Verwendung in einem Verteilungssystem für Hochspannungsstrom, wobei
die Vorrichtung eine Hochspannungsübertragungsleitung (108);
ein aktives Impedanzeinspeisungsmodul (400; 450) mit einem Spannungswandler (405) und einem Reiheneinspeisungstransformator (400A),
wobei der Reiheneinspeisungstransformator eine Primärwicklung (403) mit mehreren Windungen und einem ersten und einem zweiten Ende aufweist, wobei der Spannungswandler (405) Spannungen in dem geeigneten Phasenwinkel erzeugt, die einer Sekundärwicklung (404) des Reiheneinspeisungstransformators (400A) einzuprägen sind, um eine induktive oder kapazitive Last in die Übertragungsleitung (108) einzuspeisen;
einen Mast;
wobei das aktive Impedanzeinspeisungsmodul (400; 450) an dem Mast durch einen Hängeisolator (420) aufgehängt ist, welcher das Gewicht des aktiven Impedanzeinspeisungsmoduls (400; 450) trägt,
wobei ein Ende (401, 402) eines ersten und eines zweiten Hochspannungsleitungssegments der Hochspannungsübertragungsleitung (108) mit dem Mast durch einen ersten bzw. einen zweiten Abspannisolator (320) verbunden ist; und
erste und zweite Überbrückungen (330), wobei ein erstes Ende jeder der ersten und zweiten Überbrückungen (330) mit einem jeweiligen der Enden des ersten und zweiten Hochspannungsleitungssegments (108) verbunden ist;
wobei das zweite Ende jeder der ersten und zweiten Überbrückungen (330) jeweils mit einem jeweiligen Ende der Primärwicklung verbunden ist, sodass die Primärwicklung (403) mit mehreren Windungen in Reihe mit der Hochspannungsübertragungsleitung (108) verbunden ist, umfasst.

2. Vorrichtung nach Anspruch 1, wobei der Mast ein Abspannmast ist.

3. Vorrichtung nach Anspruch 1 oder 2, ferner umfassend einen horizontalen Stützisolator (430), der zwischen dem Mast und dem aktiven Impedanzeinspeisungsmodul (400; 450) gekoppelt ist und die Position des aktiven Impedanzeinspeisungsmoduls (400; 450) stabilisiert, um Bewegungen des aktiven Impedanzeinspeisungsmoduls (400; 450) bei starkem Wind zu verhindern oder zu begrenzen.

4. Vorrichtung nach Anspruch 1, wobei das aktive Impedanzeinspeisungsmodul (400; 450) bei einem Potential der Hochspannungsleitungssegmente (108) arbeitet.

5. Vorrichtung nach Anspruch 1, wobei der Reiheneinspeisungstransformator (400A) einen Transformatorkern (409) ohne Spalt aus einem Material mit hoher Dielektrizitätskonstante aufweist.

6. Vorrichtung nach Anspruch 1, wobei das aktive Impedanzeinspeisungsmodul (400; 450) einen Reiheneinspeisungstransformator (400A) innerhalb eines Gehäuses umfasst.

## Revendications

1. Appareil destiné à être utilisé dans un système de distribution d'énergie haute tension, ledit appareil comprenant
une ligne de transmission haute tension (108) ;
un module à injection d'impédance active (400 ; 450) ayant un convertisseur de tension (405) et un transformateur à injection en série (400A), ledit transformateur à injection en série ayant un enroulement primaire multispires (403) ayant des première et deuxième extrémités, le convertisseur de tension (405) générant des tensions à l'angle de phase approprié à appliquer sur un enroulement secondaire (404) du transformateur à injection en série (400A) pour injecter une charge inductive ou capacitive sur la ligne de transmission (108) ;
un pylône ;
le module à injection d'impédance active (400 ; 450) étant suspendu au pylône par un isolateur de suspension (420) supportant le poids du module à injection d'impédance active (400 ; 450) ;
une extrémité (401, 402) de premier et deuxième segments de ligne haute tension de la ligne de transmission haute tension (108) étant connectée au pylône à travers des premier et deuxième isolateurs de contrainte (320), respectivement ; et
des premier et deuxième cavaliers (330), une première extrémité de chacun des premier et deuxième cavaliers (330) étant connectée à l'une respective des extrémités des premier et deuxième segments de ligne haute tension (108) ;
la deuxième extrémité de chacun des premier et deuxième cavaliers (330) chacune étant connectée à une extrémité respective de l'enroulement primaire de sorte que l'enroulement primaire multispires (403) soit connecté en série à la ligne de transmission haute tension (108).

2. Appareil selon la revendication 1 dans lequel le pylône est un pylône d'ancrage.

3. Appareil selon la revendication 1 ou 2 comprenant en outre un isolateur de poteau horizontal (430) couplé entre le pylône et le module à injection d'impédance active (400 ; 450) et stabilisant la position du module à injection d'impédance active (400 ; 450) pour empêcher ou limiter le mouvement de vent fort du module à injection d'impédance active (400 ; 450).

4. Appareil selon la revendication 1 dans lequel le module à injection d'impédance active (400 ; 450) fonctionne à un potentiel des segments de ligne haute tension (108).

5. Appareil selon la revendication 1 dans lequel le transformateur à injection en série (400A) a un noyau de transformateur non espacé (409) en matériau à haute permittivité.

6. Appareil selon la revendication 1 dans lequel le module à injection d'impédance active (400 ; 450) comprend un transformateur à injection en série (400A) au sein d'un boîtier.
